# EUROPÄISCHE PATENTANMELDUNG

(11) **EP 1 862 372 A1**
(43) Veröffentlichungstag der Anmeldung: **05.12.2007**
(21) Anmeldenummer: 07107619.4
(22) Anmeldetag: 07.05.2007
(51) Int. Cl.: B62D 5/04, B62D 1/28, B62D 15/02

(54) **Servolenksystem eines Kraftfahrzeugs**

(30) Priorität: 01.06.2006 DE 102006025498
(71) Anmelder: ZF-Lenksysteme GmbH, 73527 Schwäbisch Gmünd (DE)
(72) Erfinder: Heilig, Arnulf, 73529, Schwäbisch Gmünd (DE)

(57) **Zusammenfassung**

Die Erfindung betrifft ein Servolenksystem eines Kraftfahrzeugs, mit
- einer Lenkhandhabe zur Vorgabe eines Lenkradwinkels als Maß für einen gewünschten Radlenkwinkel (δ_{Fm}) für wenigstens ein lenkbares Rad des Kraftfahrzeugs,
- einem Lenkgetriebe, welches den Lenkradwinkel in den Radlenkwinkel (δ_{Fm}) des wenigstens einen lenkbaren Rades des Kraftfahrzeugs umsetzt,
- einem Servoantrieb zur Realisierung einer Lenkmomentvorgabe, und
- einem elektronischen Steuergerät (11) zur Ansteuerung und Regelung des Servoantriebs,

dadurch gekennzeichnet, dass zur automatischen Einstellung eines vorgegebenen Sollradlenkwinkels (δ_{Fmd}) durch den Servoantrieb, insbesondere zum autonomen Fahren des Kraftfahrzeugs entlang einer Solltrajektorie, das elektronische Steuergerät (11) zur selbstständigen Regelung des Radlenkwinkels (δ_{Fm}) mittels interner Größen des Servoantriebs eingerichtet ist.

## Beschreibung

Die Erfindung betrifft ein Servolenksystem eines Kraftfahrzeugs gemäß dem Oberbegriff von Anspruch 1.

### Stand der Technik

Aus der DE 100 52 275 A1 ist ein Servolenksystem, welches als Servolenkung für ein Kraftfahrzeug ausgebildet ist, bekannt, wobei eine als Lenkrad ausgebildete Lenkhandhabe zur Verschwenkung eines lenkbaren Rades dient. Das Rad ist gelenkig in bekannter Weise mit Radlenkhebeln und pro Stange mit einem verlagerbaren Bauelement, wie etwa einer Schub- oder Zahnstange, eines Getriebes, wie etwa einem Kugelumlaufgetriebe, verbunden. Ein elektrischer Servomotor ist antriebsmäßig mit dem verlagerbaren Bauelement des Getriebes verbunden. Zur spielfreien Verbindung des elektrischen Servomotors mit dem Getriebe dient eine Riemenscheibe an der Motorwelle des Servomotors, welche mit einer eingangsseitigen Riemenscheibe an dem Getriebe über einen Zahnriemen wirkverbunden ist.

Des weiteren ist aus der DE 100 13 711 A1 ein Lenksystem bekannt, das unter anderem einen Servoantrieb zur Momentenunterstützung (Servolenkung) aufweist. Der Grad der Momentenunterstützung ist bei dem beschriebenen Lenksystem abhängig von der Fahrzeuggeschwindigkeit. Während bei langsamer Fahrzeuggeschwindigkeit die Momentenunterstützung größer ist (z. B. um beim Rangieren des Fahrzeugs das Lenkrad ohne großen Kraftaufwand betätigen zu können), wird die Momentenunterstützung bei höheren Geschwindigkeiten (z. B. um die Fahrstabilität bei einer Autobahnfahrt zu erhöhen) gesenkt. Der Servoantrieb kann elektrisch oder hydraulisch arbeiten.

Aus der Praxis sind verschiedene Ansätze für ein halbautomatisches Fahren eines Kraftfahrzeugs entlang einer Solltrajektorie bzw. Einparken eines Kraftfahrzeugs in eine Parklücke mit Hilfe derartiger Servolenksysteme bekannt.

Beispielsweise beschreibt die DE 103 37 842 A1 eine Vorrichtung zur semiautonomen Unterstützung des Einparkvorgangs bei Fahrzeugen mit einer Einheit zur Ermittlung einer geeigneten Einparkbahn und Mittel zur Bestimmung der aktuellen Position des Fahrzeugs sowie einer Kommunikationseinrichtung, vermittels der einem Fahrzeuglenker in Abhängigkeit von der aktuellen Position des Fahrzeugs in Bezug auf die ermittelte geeignete Einparkbahn Fahranweisungen mitteilbar sind. Dazu sind Servomittel zur Betätigung der Lenkung vorgesehen, die Lenkbewegungen oder Lenkkorrekturen in einem vergleichsweise kleinen vorgegebenen Winkelbereich automatisch ausführen. Eine Kontrolleinrichtung übermittelt einen Solllenkwinkel sowohl über eine Kommunikationseinrichtung (z. B. optisch, akustisch oder haptisch) an den Fahrer des Fahrzeugs als auch an eine aktive Lenkung des Fahrzeugs.

Nachteilig bei den bisherigen Lösungen ist, dass die Regelung der Sollwinkelvorgabe durch ein separates Steuergerät, insbesondere über den CAN-Bus des Kraftfahrzeugs erfolgt. Daraus resultiert eine sehr geringe Regelgüte des Lenkwinkels. Durch die Kommunikation über den CAN-Bus ergeben sich Totzeiten von mehr als 10 ms im Regler. Entsprechendes gilt für den Istwert-Eingang des Lenkwinkelsignals. Des weiteren ist die Auflösung des Istwert-Eingangs relativ schlecht. Darüber hinaus ist durch die Totzeiten keine sinnvolle Dynamikbegrenzung möglich. Mit den bekannten Systemen sind sonach im Wesentlichen nur halbautomatische bzw. semiautonome Einparksysteme realisierbar.

### Offenbarung der Erfindung

### Technische Aufgabe

Ausgehend davon liegt der vorliegenden Erfindung die Aufgabe zugrunde, ein Servolenksystem eines Kraftfahrzeugs der eingangs erwähnten Art zu schaffen, welches die Nachteile des Standes der Technik vermeidet, insbesondere ein halbautomatisches Fahren eines Kraftfahrzeugs entlang einer Solltrajektorie verbessert bzw. ein autonomes Fahren entlang einer Solltrajektorie ermöglicht.

### Technische Lösung

Diese Aufgabe wird erfindungsgemäß durch die in Anspruch 1 genannten Merkmale gelöst.

Dadurch, dass das elektronische Steuergerät zur selbstständigen Regelung des Radlenkwinkels mittels interner Größen des Servoantriebs eingerichtet ist, wird die Regelung des Lenkwinkels in vorteilhafter Weise in das Servolenksystem, insbesondere in die elektromechanische Lenkung verlagert, wodurch eine deutliche Verbesserung der Regelgüte erzielt werden kann. Eine externe Steuereinrichtung, beispielsweise ein separates Fahrzeugsystem, welches die Bahnregelung, d. h. die Fahrt entlang der Solltrajektorie, durchführt, übergibt somit lediglich über den fahrzeuginternen CAN-Bus die Solllenkwinkelvorgaben, welche schließlich durch das Servolenksystem selbständig eingeregelt werden. Die Verbesserung der Regelgüte wird durch folgende Gegebenheiten erreicht: Die Totzeit für die Regelung des Lenkwinkels entspricht nun der Programmzykluszeit (z. B. 1 ms). Des weiteren liegt das Ist-Lenkwinkelsignal bzw. die Rotordrehzahl intern in dem Servolenksystem bzw. dem Servoantrieb mit einer sehr hohen Genauigkeit vor (< 0,05° Lenkwinkel). Darüber hinaus kann nun eine Kaskadenreglerstruktur mit einer Drehzahldynamikbegrenzung realisiert werden. Sonach lässt sich ein autonomes Fahren bzw. Einparken des Kraftfahrzeugs präzise mit einer hohen Regelgüte erreichen.

Weitere vorteilhafte Ausgestaltungen der Erfindung ergeben sich aus den Unteransprüchen. Nachfolgend ist anhand der Zeichnung prinzipmäßig ein Ausführungsbeispiel der Erfindung angegeben.

### Kurze Beschreibung der Zeichnungen

Es zeigt:

Fig. 1 eine vereinfachte schematische Darstellung eines erfindungsgemäßen Servolenksystems; und

Fig. 2 eine vereinfachte schematische Darstellung einer Regelungsstruktur für den Radlenkwinkel.

### Bevorzugtes Ausführungsbeispiel

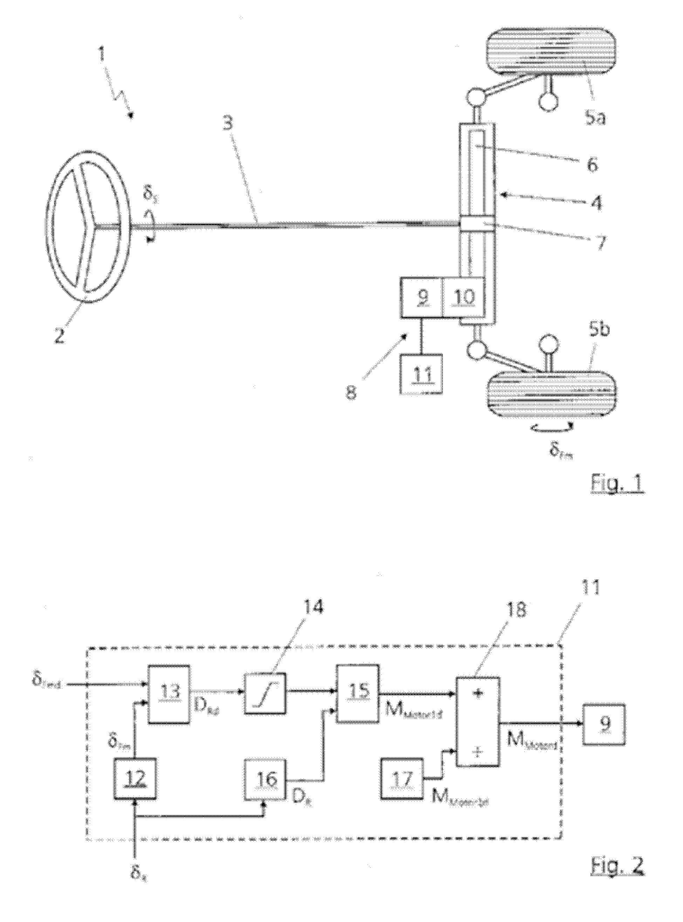

Fig. 1 zeigt ein elektrisches Servolenksystem 1 eines nicht dargestellten Kraftfahrzeugs. Das elektrische Servolenksystem 1 weist eine als Lenkrad 2 ausgebildete Lenkhandhabe auf. Das Lenkrad 2 ist über eine Gelenkwelle bzw. Lenksäule 3 mit einem Lenkgetriebe 4 verbunden. Das Lenkgetriebe 4 dient dazu, einen Drehwinkel der Lenksäule 3 in einen Radlenkwinkel δ_{Fm} von lenkbaren Rädern 5a, 5b des Kraftfahrzeugs umzusetzen. Das Lenkgetriebe 4 weist eine Zahnstange 6 und ein Ritzel 7 auf, an welches die Lenksäule 3 angreift. Durch das Lenkrad 2 wird ein Lenkradwinkel δs als Maß für einen gewünschten Radlenkwinkel δ_{Fm} der lenkbaren Räder 5a, 5b des Kraftfahrzeugs vorgegeben.

Das elektrische Servolenksystem 1 weist des weiteren einen elektrischen Servoantrieb 8 auf, welcher der variablen Momentenunterstützung bzw. der variablen Vorgabe eines Lenkmoments dient. Der elektrische Servoantrieb 8 weist einen Elektromotor 9 zur Realisierung der Lenkmomentvorgabe über ein Riemengetriebe 10 auf. Das Riemengetriebe 10 weist ein Antriebsritzel und eine Riemenscheibe zur Übertragung der Momentenunterstützung über ein Kugelumlaufgetriebe (nicht dargestellt) auf die Zahnstange 6 des elektrischen Servolenksystems 1 auf. Des weiteren ist ein elektronisches Steuergerät 11 zur Ansteuerung bzw. Regelung des Elektromotors 9 vorgesehen.

Die Erfindung wird anhand eines elektrischen Servolenksystems 1 mit einem Riemengetriebe 10 und einem separaten Kugelumlaufgetriebe zur Übertragung der Unterstützungskraft auf die Zahnstange 6, wie beispielsweise aus der DE 100 52 275 bekannt, beschrieben. Für weitere elektrische und hydraulische Servolenksystemtechnologien, bei welchen der Servoantrieb beispielsweise Hydraulikmittel aufweist, mit Momenten- bzw. Lenkunterstützung lassen sich jedoch mit geringfügigen Änderungen gleiche erfindungsgemäße Umsetzungen erzielen.

Erfindungsgemäß ist zur automatischen Einstellung eines vorgegebenen Sollradlenkwinkels δ_{Fmd} durch den Servoantrieb 8, insbesondere zum autonomen Fahren des Kraftfahrzeugs entlang einer Solltrajektorie, das elektronische Steuergerät 11 zur selbständigen Regelung des Radlenkwinkels δ_{Fm} mittels interner Größen des Servoantriebs 8 eingerichtet bzw. weist eine entsprechende Regelungsstruktur auf. Die Solltrajektorie kann als Einparktrajektorie zum Einparken des Kraftfahrzeugs ausgebildet sein. Der Sollradlenkwinkel δ_{Fmd} ist durch ein übergeordnetes Fahrzeugsystem, welches die Solltrajektorie ermittelt, insbesondere eine externe Steuereinrichtung, vorgebbar.

Fig. 2 zeigt stark vereinfacht eine schematische Darstellung einer Regelungsstruktur für den Radlenkwinkel δ_{Fm}, welche auf dem Steuergerät 11 (in Fig. 2 gestrichelt angedeutet) zur selbstständigen Regelung des Radlenkwinkels δ_{Fm} implementiert ist. Wie aus Fig. 2 ersichtlich erhält ein erstes Berechnungsmodul 12 von einem nicht dargestellten im Bereich des Elektromotors 9 angeordneten Sensor einen aktuellen Rotorwinkel δ_{R} des Elektromotors 9 als Eingangssignal und ermittelt daraus den aktuellen Radlenkwinkel δ_{Fm}, welcher an einen Winkelregler 13 übermittelt wird. Der Winkelregler 13 erhält als weiteres Eingangssignal den Sollradlenkwinkel δ_{Fmd} über einen nicht dargestellten CAN-Bus des Kraftfahrzeugs von einem übergeordneten Fahrzeugssystem, insbesondere um eine Fahrt entlang einer Solltrajektorie zu realisieren. Der Winkelregler 13 berechnet eine Reglerdifferenz als Sollrotordrehzahl D_{Rd} für den Elektromotor 9, welche anschließend in einem Begrenzungsmodul 14 begrenzt und an einen Drehzahlregler 15 als Eingangswert übermittelt wird. Ein zweites Berechnungsmodul 16 erhält ebenfalls den aktuellen Rotorwinkel δ_{R} des Elektromotors 9 als Eingangssignal, ermittelt daraus die aktuelle Rotordrehzahl D_{R} des Elektromotors 9 und übermittelt diese an den Drehzahlregler 15 als weiteres Eingangssignal. Der Drehzahlregler 15 bestimmt als Ausgangswert ein erstes Motorsollmoment M_{Motor1d} des Elektromotors 9. Weitere Lenkfunktionalitäten 17, wie beispielsweise ein aktiver Rücklauf oder dergleichen, liefern wenigstens ein weiteres Motorsollmoment M_{Motor2d} des Elektromotors 9. Die beiden Motorsollmomente M_{Motor1d,} M_{Motor2d} des Elektromotors 9 werden in einem dritten Berechnungsmodul 18 addiert und ergeben das Motorsollmoment M_{Motord} mit welchem der Elektromotor 9 angesteuert wird. Durch diese Regelungsstruktur wird eine hohe Regelgüte erreicht. Sonach lässt sich ein autonomes Fahren bzw. Einparken des Kraftfahrzeugs präzise realisieren.

### Bezugszeichen

- 1: elektrisches Servolenksystem
- 2: Lenkrad
- 3: Gelenkwelle / Lenksäule
- 4: Lenkgetriebe
- 5a,5b: lenkbare Räder
- 6: Zahnstange
- 7: Ritzel
- 8: elektrischer Servoantrieb
- 9: Elektromotor
- 10: Riemengetriebe
- 11: elektronisches Steuergerät des Servoantriebs
- 12: erstes Berechnungsmodul
- 13: Winkelregler
- 14: Begrenzungsmodul
- 15: Drehzahlregler
- 16: zweites Berechnungsmodul
- 17: weitere Lenkfunktionalitäten
- 18: drittes Berechnungsmodul

- δ_{Fm}: Radlenkwinkel bzw. Lenkwinkel
- δ_{Fmd}: Sollradlenkwinkel
- δ_{G}: Ritzelwinkel
- δ_{S}: Lenkradwinkel
- δ_{R}: Rotorwinkel des Elektromotors
- D_{R}: Rotordrehzahl
- D_{Rd}: Sollrotordrehzahl
- M_{Motord}: Motorsollmoment
- M_{Motor1d}: Motorsollmoment des Drehzahlreglers
- M_{Motor2d}: Motorsollmoment der weiteren Lenkfunktionalitäten

## Patentansprüche

1. Servolenksystem (1) eines Kraftfahrzeugs, mit
- einer Lenkhandhabe (2) zur Vorgabe eines Lenkradwinkels (δₛ) als Maß für einen gewünschten Radlenkwinkel (δ_{Fm}) für wenigstens ein lenkbares Rad (5a,5b) des Kraftfahrzeugs,
- einem Lenkgetriebe (4), welches den Lenkradwinkel (δₛ) in den Radlenkwinkel (δ_{Fm}) des wenigstens einen lenkbaren Rades (5a,5b) des Kraftfahrzeugs umsetzt,
- einem Servoantrieb (8) zur Realisierung einer Lenkmomentvorgabe, und
- einem elektronischen Steuergerät (11) zur Ansteuerung und Regelung des Servoantriebs (8),
**dadurch gekennzeichnet, dass** zur automatischen Einstellung eines vorgegebenen Sollradlenkwinkels (δ_{Fmd}) durch den Servoantrieb (8), insbesondere zum autonomen Fahren des Kraftfahrzeugs entlang einer Solltrajektorie, das elektronische Steuergerät (11) zur selbständigen Regelung des Radlenkwinkels (δ_{Fm}) mittels interner Größen des Servoantriebs (8) eingerichtet ist.

2. Servolenksystem nach Anspruch 1, **dadurch gekennzeichnet, dass** der Sollradlenkwinkel (δ_{Fmd}) durch ein übergeordnetes Fahrzeugsystem, insbesondere ein externes Steuergerät vorgebbar ist.

3. Servolenksystem nach Anspruch 1 oder 2, **dadurch gekennzeichnet, dass** die Solltrajektorie eine Einparktrajektorie zum Einparken des Kraftfahrzeugs ist.

4. Servolenksystem nach Anspruch 1, 2 oder 3, **dadurch gekennzeichnet, dass** der Servoantrieb (8) einen Elektromotor (9) aufweist.

5. Servolenksystem nach Anspruch 1, 2 oder 3, **dadurch gekennzeichnet, dass** der Servoantrieb Hydraulikmittel aufweist.
